# EUROPEAN PATENT APPLICATION

(11) **EP 4 253 672 A1**
(43) Date of publication of application: **04.10.2023**
(21) Application number: 23165293.4
(22) Date of filing: 30.03.2023
(51) Int. Cl.: E02F 9/26

(54) **WORK RESULT INFORMATION ACQUISITION DEVICE, WORK RESULT INFORMATION ACQUISITION SYSTEM, CONTROL METHOD OF WORK RESULT INFORMATION ACQUISITION DEVICE, AND CONTROL PROGRAM OF WORK RESULT INFORMATION ACQUISITION DEVICE**

(30) Priority: 31.03.2022 JP 2022060556
(71) Applicant: TOPCON CORPORATION, Tokyo 174-8580 (JP)
(72) Inventor: KUMAGAI, Kaoru, Tokyo, 174-8580 (JP); SHOJI, Naoki, Tokyo, 174-8580 (JP); SASAKI, Takeshi, Tokyo, 174-8580 (JP)
(74) Representative: Mewburn Ellis LLP

(57) **Abstract**

There is provided a work result information acquisition device or the like capable of acquiring work result information automatically and accurately. The work result information acquisition device includes a tracking part which tracks a movable body, a scanning part which acquires three-dimensional point cloud information on an object, a movable body movement information acquisition part which acquires movable body movement information, which is movement information of the movable body by tracking, by the tracking part and stores the movable body movement information, and a work area information generation part which generates work area information on the object, based on the movable body movement information, and three-dimensional work result information of the work area information is generated by scanning, based on the work area information.

## Description

### BACKGROUND OF THE INVENTION

### 1. Field of the Invention

The present invention relates to a work result information acquisition device for acquiring work result information on an object, a work result information acquisition system, a control method of the work result information acquisition device, and a non-transitory computer-readable medium storing computer program instructions for the work result information acquisition device.

### 2. Description of the Related Art

Conventionally, for example, in a case where construction or the like is performed at a construction site or the like, a surveying instrument is used (e.g., Japanese Patent Application Publication No. 2017-223540).

In addition, at the construction site or the like, intended work or the like is performed based on data obtained by surveying the construction site by such a surveying instrument or data of a design or the like (e.,g.,Japanese Patent Application Publication No.2017-223540).

### SUMMARY OF THE INVENTION

However, in a case where such work or the like is not finished in one day and is continuously performed according to another schedule, it is preferable to ascertain a situation of work already finished before resuming the work, but a problem arises in that it is difficult to accurately grasp the situation of the site of work already finished.

To cope with this, an object of the present invention is to provide a work result information acquisition device capable of acquiring work result information automatically and accurately, a work result information acquisition system, a control method of the work result information acquisition device, and a non-transitory computer-readable medium storing computer program instructions for the work result information acquisition device.

According to the present invention, the above object is achieved by a work result information acquisition device including: a tracking part which tracks a movable body; a scanning part which acquires three-dimensional point cloud information on an object; a movable body movement information acquisition part which acquires movable body movement information, which is movement information on the movable body, by tracking by the tracking part and stores the movable body movement information; and a work area information generation part which generates work area information on the object, based on the movable body movement information, wherein three-dimensional work result information of the work area information is generated by scanning by the scanning part, based on the work area information.

According to the above-described configuration, the movable body movement information (e.g., tractor movement information) which is the movement information on the movable body such as a heavy machine is acquired by tracking by the tracking part, and the movable body movement information is stored.

Subsequently, the work area information (e.g., horizontal angle information of 0 degrees to 100 degrees or the like) which is the object such as a construction site is generated based on the movable body movement information.

Further, by scanning by the scanning part based on the work area information, it is possible to generate the three-dimensional work result information (three-dimensional point cloud data or the like) of the work area information.

Consequently, it is possible to automatically generate the three-dimensional work result information (three-dimensional point cloud data or the like) of only the work area which is a work result of the heavy machine or the like which is the movable body.

Preferably, the work result information acquisition device further includes: a horizontal angle information storage part which stores horizontal angle information related to the movable body acquired by the tracking part when the tracking part of the work result information acquisition device tracks the movable body; and a maximum movement information generation part which generates maximum movement information on a maximum area of the movable body movement information, based on the horizontal angle information, and the scanning part generates the three-dimensional work result information, based on the maximum movement information.

According to the above-described configuration, the horizontal angle information related to the movable body acquired by the tracking part when the tracking part tracks the movable body is stored, and the maximum movement information (maximum horizontal angle information or the like) which is the maximum area of the movable body movement information is generated based on the horizontal angle information.

In addition, the scanning part generates the three-dimensional work result information based on the maximum movement information.

Consequently, the scanning part can generate the maximum movement information based only on the horizontal angle information without using another three-dimensional coordinate information and the like, and can generate the maximum movement information extremely simply and easily.

Preferably, the movable body movement information of the work result information acquisition device is associated with movement time information, which is time information at a time of movement, and the maximum movement information is determined based on the movable body movement information which is associated with the movement time information in a work period between predetermined start time information and predetermined end time information.

According to the above-described configuration, the maximum movement information is determined based on the movable body movement information which is associated with the movement time information in the work period between the predetermined start time information (e.g., 9:00 or the like) and the predetermined end time information (e.g., 17:00 or the like) .

Consequently, it is possible to automatically grasp the work result in the work period and generate the three-dimensional work result information (three-dimensional point cloud data or the like).

Preferably, in the work result information acquisition device, a target part to be tracked by the tracking part is provided in the movable body.

According to the above-described configuration, the target part (a tractor-side prism or the like) to be tracked by the tracking part is provided in the movable body.

Accordingly, the tracking part can track the movable body with high accuracy by tracking the target part of the movable body.

Preferably, in the work result information acquisition device, the movable body is a construction machine, the construction machine has a work end part for work, and the target part is a work end part target part which is disposed in the work end part.

According to the above-described configuration, the movable body is the construction machine, the construction machine has the work end part for work (a work blade or the like), and the work end part target part (a blade-side prism or the like) is disposed in the work end part.

Consequently, it is possible to determine the movement of the work blade, and also determine whether or not the heavy machine is in operation.

According to the present invention, the above object is achieved by a work result information acquisition system including: a work result information acquisition device including a tracking part which tracks a movable body and a scanning part which acquires three-dimensional point cloud information on an object; and a terminal device capable of communicating with the work result information acquisition device, wherein the terminal device includes: a movable body movement information acquisition part which acquires movable body movement information, which is movement information on the movable body, by tracking by the tracking part and stores the movable body movement information; and a work area information generation part which generates work area information on the object, based on the movable body movement information, and three-dimensional work result information of the work area information is generated by scanning by the scanning part, based on the work area information.

According to the present invention, the above object is achieved by a control method of a work result information acquisition device including a tracking part which tracks a movable body and a scanning part which acquires three-dimensional point cloud information on an object, the control method including: acquiring movable body movement information, which is movement information on the movable body, by tracking by the tracking part; causing a work area information generation part to generate work area information on the object, based on the movable body movement information; and generating three-dimensional work result information of the work area information by scanning by the scanning part, based on the work area information.

According to the present invention, the above object is achieved by a non-transitory computer-readable medium storing computer program instructions for a work result information acquisition device which causes the work result information acquisition device including a tracking part which tracks a movable body and a scanning part which acquires three-dimensional point cloud information on an object to implement: a function of acquiring movable body movement information, which is movement information on the movable body by tracking, by the tracking part; a function of causing a work area information generation part to generate work area information on the object, based on the movable body movement information; and a function of generating three-dimensional work result information of the work area information by scanning by the scanning part, based on the work area information.

The present invention has the advantage that it is possible to provide the work result information acquisition device capable of acquiring the work result information automatically and accurately, the work result information acquisition system, the control method of the work result information acquisition device, and the non-transitory computer-readable medium storing computer program instructions for the work result information acquisition device.

### BRIEF DESCRIPTION OF THE DRAWINGS

FIG. 1 is a schematic view showing a main configuration of a "work result information acquisition system 100" according to a first embodiment of the present invention;
FIG. 2 is a schematic perspective view showing a bulldozer 300 in FIG. 1;
FIG. 3 is a schematic view showing a main configuration of a surveying instrument 2 in FIG. 1;
FIG. 4 is a schematic block diagram showing a main configuration of a tablet 200 in FIG. 1;
FIG. 5 is a schematic flowchart showing a main operation example of a present system 100;
FIG. 6 is another schematic flowchart showing the main operation example of the present system 100;
FIG. 7 is a schematic perspective view showing a bulldozer 400 in a work result information acquisition system according to a second embodiment of the present invention; and
FIG. 8 is a schematic flowchart showing an operation example of the work result information acquisition system according to the second embodiment.

### DESCRIPTION OF THE PREFERRED EMBODIMENTS

Hereinbelow, preferred embodiments of the invention will be described in detail with reference to the accompanying drawings.

Note that the embodiments described below are suitable specific examples of the present invention, and hence the embodiments include technically preferred various limitations. However, the scope of the present invention is not limited to these embodiments unless limitations to the present invention are particularly stated in the description below.

### First Embodiment

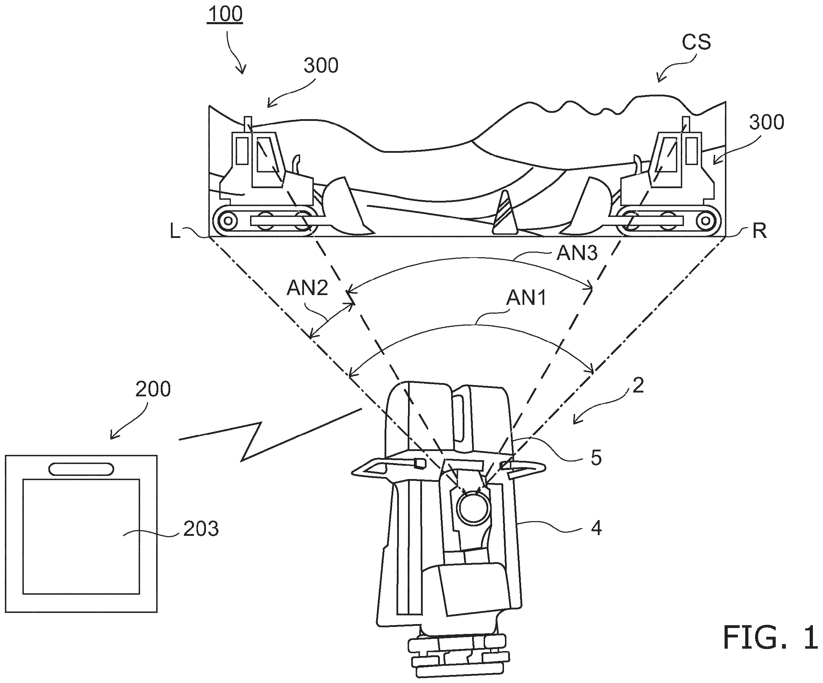

FIG. 1 is a schematic view showing a main configuration of a "work result information acquisition system 100" according to a first embodiment of the present invention.

As shown in FIG. 1, the present system 100 has a "surveying instrument 2" which is an example of a work result information acquisition device, a "tablet 200" which is an example of a terminal device capable of communicating with the surveying instrument 2, and a "bulldozer 300" which is an example of each of a movable body and a construction machine which perform work such as construction at a "construction site CS" which is an example of an object.

Note that, in the present embodiment, for the convenience of description, the bulldozer 300 is used as an example. That is, while a description will be made by using an example in which the bulldozer 300 shown in FIG. 1 performs movement and work at the construction site CS, the number of movable bodies of the present invention may be singular or plural, or a large number of movable bodies may be used, and the movable body includes not only a construction machine or the like but also a worker or the like.

A description will be made below by using an example in which, in the present system 100, the surveying instrument 2 automatically acquires work result information of the bulldozer 300 having performed work at the construction site CS shown in FIG. 1 as three-dimensional point cloud data (three-dimensional point cloud information) (an example of three-dimensional work result information), and stores the three-dimensional point cloud data. By acquiring such three-dimensional point cloud data, it is possible to smoothly perform continuous work at the construction site CS performed at a later data.

In addition, each of the bulldozer 300, the surveying instrument 2, and the tablet 200 in FIG. 1 has a computer, and the computer has a CPU (Central Processing Unit), a RAM (Random Access Memory), and a ROM (Read Only Memory) which are not shown, and the CPU, the RAM, and the ROM are connected to each other via a bus or the like.

Hereinafter, a description will be given of each of the devices such as the "bulldozer 300", the surveying instrument 2, and the tablet 200 which are included in the present system 100.

### Configuration of Bulldozer 300

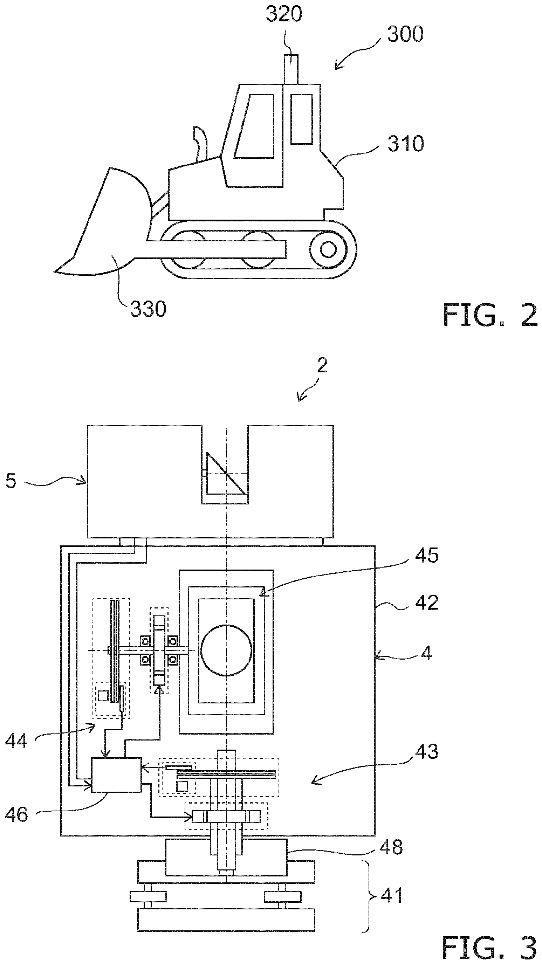

FIG. 2 is a schematic perspective view showing the bulldozer 300 in FIG. 1.

As shown in FIG. 2, the bulldozer 300 has a tractor 310 which is a bulldozer main body, and a work blade 330 (an example of a work end part) which is used when the bulldozer 300 excavates earth or the like at the construction site CS and is movable independently of the tractor 310.

The work blade 330 is an attachment for performing bulldozer work such as excavation and hauling.

Consequently, a configuration is adopted in which a worker gets on the tractor 310 of the bulldozer 300 and operates the work blade 330, whereby it is possible to efficiently perform foundation work or the like at the construction site CS.

In addition, as shown in FIGS. 1 and 2, the bulldozer 300 has a "tractor-side prism 320" which is an example of a target part.

As will be described later, the tractor-side prism 320 is a target which is used when the surveying instrument 2 tracks the bulldozer 300, and details thereof will be described later.

Note that the "tractor-side prism 320" or the like is not particularly limited, and includes, e.g., an all-around prism, a spherical prism, or a reflective sheet for surveying.

### Configuration of Surveying Instrument 2

FIG. 3 is a schematic view showing a main configuration of the surveying instrument 2 in FIG. 1.

As shown in FIG. 3, the surveying instrument 2 has a "collimation distance measuring unit 4" having a tracking function, and a "scanner unit 5 (an example of a scanning part)" for generating three-dimensional point cloud data.

As shown in FIG. 3, the scanner unit 5 is provided integrally with the collimation distance measuring unit 4, and the scanner unit 5 is fixed to an upper portion of the collimation distance measuring unit 4.

In addition, the scanner unit 5 is disposed so as to be rotatable with respect to the collimation distance measuring unit 4.

### Configuration of Scanner Unit 5

The scanner unit 5 irradiates a scan target area with distance measuring light, measures a distance to the area based on reflected distance measuring light which is the distance measuring light reflected on the area and internal reference light, and also detects an irradiation direction of the distance measuring light.

In addition, the scanner unit 5 performs distance measurement and angle measurement.

Specifically, the scanner unit 5 acquires three-dimensional coordinates (three-dimensional data) of a large number of measurement points related to the shape of the area by irradiating the area with the distance measuring light while rotating to measure the distance to the area and detect the irradiation direction of the distance measuring light.

That is, as will be described later, the scanner unit 5 acquires three-dimensional data (point cloud data) of a large number of measurement points in the shape of a work area of the bulldozer 300.

### Configuration of Collimation Distance Measuring Unit 4

The collimation distance measuring unit 4 in FIG. 3 performs distance measurement and angle measurement for, e.g., the tractor-side prism 320 serving as a measurement target.

The collimation distance measuring unit 4 of the present embodiment has a leveling part 41, a bracket part 42, a horizontal rotation part 43, a vertical rotation part 44, and a telescope part 45 and, in addition, the collimation distance measuring unit 4 has a control calculation part 46 and a base part 48.

The collimation distance measuring unit 4 is referred to as, e.g., a total station, irradiates the tractor-side prism 320 with the distance measuring light using collimation of the telescope part 45, measures a distance to the tractor-side prism 320 based on reflected distance measuring light which is the distance measuring light reflected on the tractor-side prism 320 and internal reference light, and detects the irradiation direction of the distance measuring light, i.e., the direction of the collimation of the telescope part 45.

That is, the collimation distance measuring unit 4 is configured to perform distance measurement and angle measurement to the tractor-side prism 320, and acquire three-dimensional coordinate information of the tractor-side prism 320 with respect to the surveying instrument 2.

### Automatic Tracking Function of Collimation Distance Measuring Unit 4

The collimation distance measuring unit 4 has an automatic tracking function (an example of a tracking part) which automatically searches for the tractor-side prism 320.

The telescope part 45 is collimated to the tractor-side prism 320, tracking light is emitted from the collimation distance measuring unit 4, and reflected light from the tractor-side prism 320 is received and detected.

In the case where the tractor-side prism 320 has moved, a configuration is adopted in which deviation (error) between a light reception position of the reflected light from the tractor-side prism 320 and a collimation center is detected, a collimation direction is corrected based on the deviation (error), and the tractor-side prism 320 is automatically tracked.

At the construction site (CS) in FIG. 1, the surveying instrument 2 is disposed at a predetermined position, and the surveying instrument 2 is configured to be able to perform distance measurement and angle measurement for the tractor-side prism 320 of the bulldozer 300, and acquire coordinate position information (three-dimensional position information) of the tractor-side prism 320.

As described above, the surveying instrument has the tracking function, and hence the surveying instrument can track the movement of the tractor-side prism 320 of the bulldozer 300 and acquire coordinate information after the movement.

Subsequently, in the case where the bulldozer 300 has moved, it is possible to acquire the coordinate information of the tractor-side prism 320, and hence a configuration is adopted in which it is possible to acquire "horizontal angle (ΔH)" information before and after the movement and store the horizontal angle information.

Details thereof will be described later.

### Configuration of Tablet 200

As shown in FIG. 1, the tablet 200 is configured to be able to communicate with the surveying instrument 2 and be operated by a user of the present system 100.

Note that, in the present embodiment, as will be described later, the tablet 200 operated by the user of the present system 100 or the like is configured to instruct the surveying instrument 2 to perform an operation, but the present invention is not limited thereto and, instead of using the tablet 200, the surveying instrument 2 itself may be configured to determine and execute the operation of the surveying instrument 2.

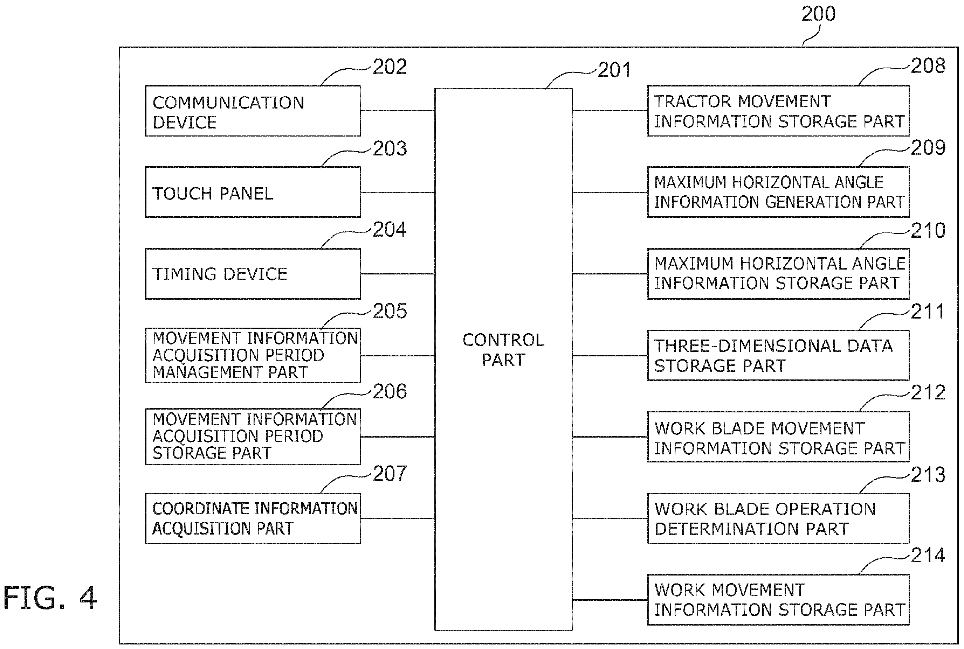

FIG. 4 is a schematic block diagram showing a main configuration of the tablet 200 in FIG. 1.

As shown in FIG. 4, the tablet 200 has a "control part 201", and the control part 201 controls a "communication device 202" which communicates with the surveying instrument 2 in FIG. 1 or the like, a "touch panel 203", and a "timing device 204" which generates time information.

The touch panel 203 is a "touch panel type display", and the touch panel is an electronic component in which a display serving as a display part and a position input device are combined and is used as an input device to which various pieces of information can be input by touching a display on the display by an operator U.

In addition, as described above, the touch panel 203 has two functions including displaying and inputting, and displays image information received from the outside such as a computer in a liquid crystal display or the like. Further, the operator U touches a point or an area of a picture or a pictogram displayed on a screen with a hand and applies pressure to the point or the area thereof, whereby the touch panel 203 senses information on a touched screen position and outputs the information to the outside as an information signal.

In addition, the touch panel 203 has a plurality of methods and, in the present embodiment, for example, an "electrostatic capacitance method" is adopted.

In the electrostatic capacitance method, a feeble current generated when a screen is touched by a finger, i.e., a change of capacitance (charge) is sensed with a sensor, and a position touched by the operator U is grasped. In addition, a configuration is adopted in which, when a finger is caused to approach the screen, the sensor responds to the capacitance of a human body.

As shown in FIG. 4, the control part 201 further controls a movement information acquisition period management part (program) 205 and the like, and the contents thereof will be described later.

### Operation Example of Present System 100

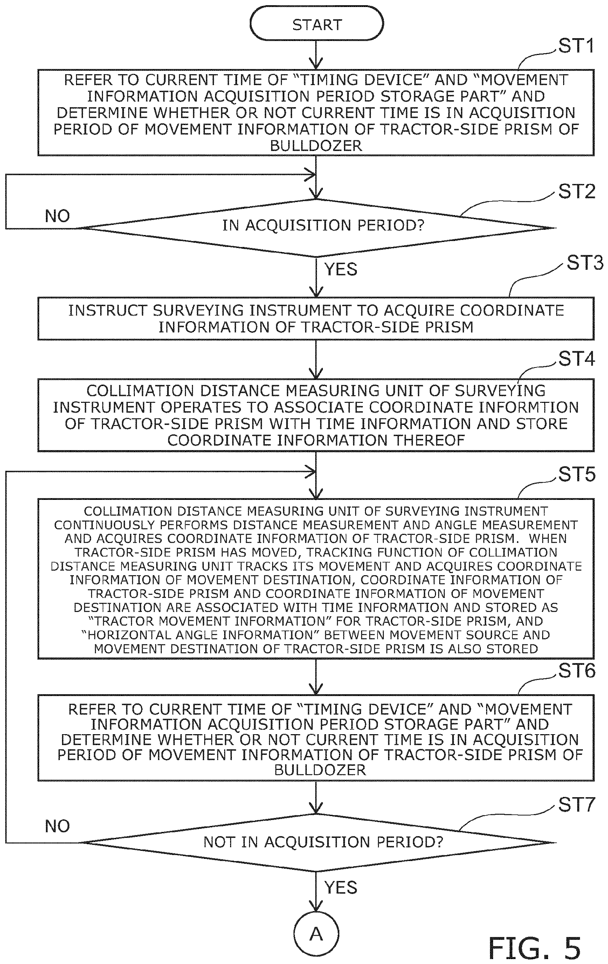

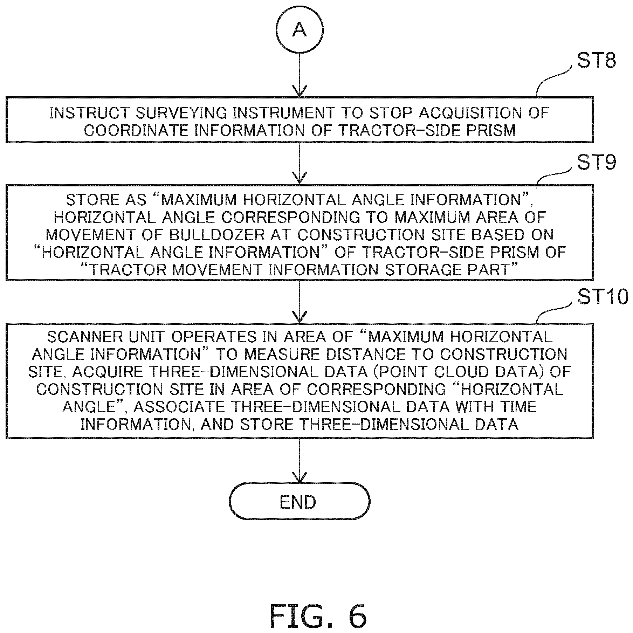

Each of FIGS. 5 and 6 is a schematic flowchart showing a main operation example of the present system 100.

In the present embodiment, a description will be made below by using an example in which, as described above, two bulldozers 300 execute work or the like in a predetermined period at the construction site CS shown in FIG. 1, and the surveying instrument 2 automatically grasps its work area, acquires a work result of the work area as three-dimensional point cloud data, and stores the three-dimensional point cloud data.

First, in Step (hereinafter referred to as "ST") 1 in FIG. 5, the "movement information acquisition period management part (program) 205" of the tablet 200 in FIG. 4 operates to refer to a current time of the "timing device 204" and a "movement information acquisition period storage part 206".

In the "movement information acquisition period storage part 206", for example, information indicating that "9:00 (an example of start time information) to 17:00 (an example of end time information)" is a work period is stored.

Subsequently, in ST2, when the management part 205 determines that the current time is in the work period, the operation example proceeds to ST3, the management part 205 determines that the current time is in an acquisition period of movement information (an example of movable body movement information) of the tractor-side prism 320 of a bulldozer 300A, and instructs the surveying instrument 2 to acquire coordinate information of the tractor-side prism 320.

Next, the operation example proceeds to ST4. In ST4, the collimation distance measuring unit 4 of the surveying instrument 2 operates with an instruction of a "coordinate information acquisition part (program) 207 (an example of a movable body movement information acquisition part)" of the tablet 200 to associate the coordinate information of the tractor-side prism 320 with time information (an example of movement time information) and store the coordinate information thereof in a "tractor movement information storage part 208" in FIG. 4.

Next, the operation example proceeds to ST5. In ST5, according to the instruction of the "coordinate information acquisition part 207" in FIG. 4, the collimation distance measuring unit 4 of the surveying instrument 2 continuously performs distance measurement and angle measurement and acquires the coordinate information of the tractor-side prism 320 and, when the tractor-side prism 320 has moved, the tracking function (an example of a tracking part) of the collimation distance measuring unit 4 tracks the movement, and acquires coordinate information of a movement destination.

Subsequently, the coordinate information of the tractor-side prism 320 and the coordinate information of the movement destination are associated with the time information, and are stored in the "tractor movement information storage part 208" as "tractor movement information" for the tractor-side prism 320.

At this point, "horizontal angle information (ΔH)" between the movement source and the movement destination of the tractor-side prism 320 is also stored.

Accordingly, the "tractor movement information storage part 208" is also an example of a horizontal angle information storage part.

Next, the operation example proceeds to ST6. In ST6, the "movement information acquisition period management part 205" of the tablet 200 operates to refer to the current time of the "timing device 204" and the "movement information acquisition period storage part 206 (e.g., 9:00 to 17:00)".

Subsequently, the movement information acquisition period management part 205 determines whether or not the current time is in the acquisition period of the movement information of the tractor-side prism 320 of the bulldozer 300 and, the operation example proceeds to ST8 when the movement information acquisition period management part 205 determines that the current time is not in the acquisition period in ST7, and the movement information acquisition period management part 205 instructs the surveying instrument 2 to stop the acquisition of the coordinate information of the tractor-side prism 320.

Thus, in the present embodiment, it is possible to acquire only the coordinate information related to the movement of the bulldozer 300 in the work period at the construction site CS automatically and accurately.

Next, the operation example proceeds to ST9. In ST9, a "maximum horizontal angle information generation part (program) 209 (an example of each of a maximum movement information generation part and a work area information generation part)" of the tablet 200 in FIG. 4 operates to store a horizontal angle corresponding to a maximum area of the movement of the bulldozer 300 at the construction site (CS) as "maximum horizontal angle information (an example of maximum movement information)" in a "maximum horizontal angle information storage part 210" in FIG. 4 based on the "horizontal angle information (ΔH)" of the tractor-side prism 320 of the "tractor movement information storage part 208" in FIG. 4.

The description of the "maximum horizontal angle information" which uses an example in FIG. 1 is as follows.

For example, in the case where it is assumed that the "horizontal angle" at a "left end (L)" of the construction site (CS) when viewed from the surveying instrument 2 in FIG. 1 is "0 degrees" and the "horizontal angle" at a "right end (R)" thereof is "90 degrees" (AN1), it is assumed that the tractor-side prism 320 has moved from 15 degrees (AN2) to 45 degrees in a period from 9:00 to 10:00, has moved from 45 degrees to 20 degrees in a period from 11:00 to 14:00, and has moved from 20 degrees to 60 degrees in a period from 15:00 to 17:00.

In this case, the "maximum horizontal angle information (inclusion angle)" which is the maximum movement area of the tractor-side prism 320 is a total of "45 degrees" from "15 degrees" to "60 degrees".

Then, in this example, "45 degrees" (AN3) "from 15 degrees to 60 degrees" is stored in the "maximum horizontal angle information storage part 210" as the "maximum horizontal angle information".

Thus, in the present embodiment, it is possible to determine the movement area of the bulldozer 300 in the predetermined work period of the bulldozer 300 based on the "horizontal angle (ΔH)" information.

Accordingly, it is possible to grasp the movement area of the bulldozer 300 automatically, easily, and accurately.

Next, the operation example proceeds to ST10. In ST10, the tablet 200 instructs the surveying instrument 2 such that the scanner unit 5 operates in an area of the "maximum horizontal angle information (0 degrees to 100 degrees in the above-described example)" to measure a distance to the construction site (CS) and also acquire three-dimensional data (point cloud data) of the construction site (CS) in the area of the "horizontal angle (ΔH)" (work area information).

Subsequently, the three-dimensional data is associated with the time information and is stored in the "three-dimensional data storage part 211" in FIG. 4.

That is, the surveying instrument 2 automatically acquires the three-dimensional point cloud data of only the work area in which the bulldozer 300 has executed work, and the tablet 200 stores the data.

Accordingly, it is possible to prevent the surveying instrument 2 from acquiring the three-dimensional point cloud data of an unnecessary portion outside the work area.

In addition, the three-dimensional point cloud data of the automatically scanned construction site CS is stored, and hence, when work is resumed at the same construction site (CS) at a later date, it is possible to grasp latest accurate work information accurately.

Further, in the present embodiment, the operation area of the scanner unit 5 is generated automatically based on the "horizontal angle (ΔH)" information, and hence it is possible to generate the operation area thereof extremely easily and quickly.

### Second Embodiment

Many configurations of the work result information acquisition system according to the present embodiment are common to the work result information acquisition system according to the first embodiment described above, and hence a description of common points will be omitted, and different points will be mainly described below.

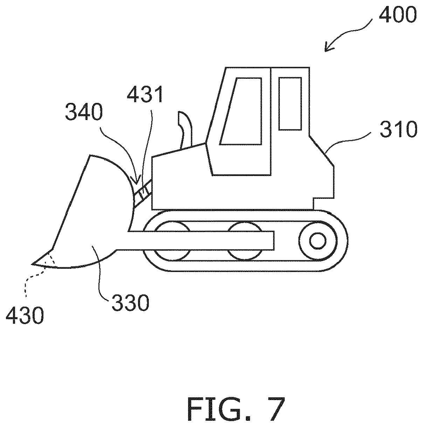

FIG. 7 is a schematic perspective view showing a bulldozer 400 in the work result information acquisition system according to a second embodiment of the present invention.

In the present embodiment, in the bulldozer 400, instead of the tractor-side prism 320 in the first embodiment described above, for example, an "edge-side prism 430" which is a work end part target part is installed in, e.g., an edge part which is a tip part of the work blade 330 which is a work end part.

In addition, the bulldozer 400 has an arm 340 which operates the work blade 330 and moves its position, and a tilt sensor 431 is disposed in the arm 340.

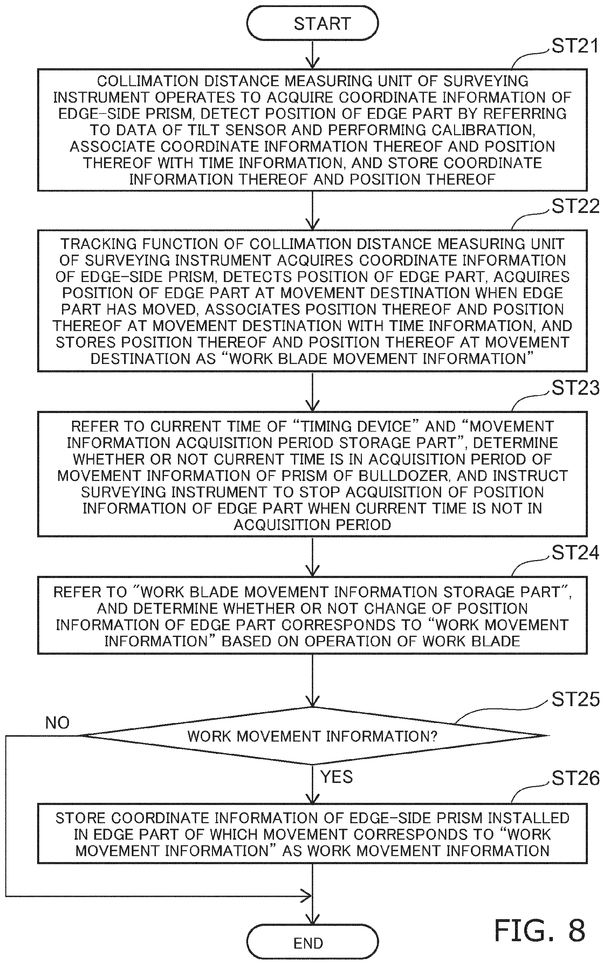

FIG. 8 is a schematic flowchart showing an operation example of the work result information acquisition system according to the present embodiment.

Hereinafter, according to the flowchart, characteristic steps which are different from those of the first embodiment will be described.

First, in ST21 in FIG. 8, according to the instruction of the "coordinate information acquisition part (program) 207" of the tablet 200 of the above-described first embodiment in FIG. 4, the collimation distance measuring unit 4 of the surveying instrument 2 operates to acquire the coordinate information of the edge-side prism 430 and detect the position (coordinate information) of the edge part by referring to tilt data of the tilt sensor 431 and performing calibration, and the coordinate information of the edge-side prism 430 and the position of the edge part are associated with the time information and are stored in a "work blade movement information storage part 212" in FIG. 4.

Next, the operation example proceeds to ST22. In ST22, according to the instruction of the coordinate information acquisition part 207, the tracking function of the surveying instrument 2 tracks the edge-side prism 430 subsequently, detects the position of the edge part similarly to the above description, and acquires the position (coordinate information) of the edge part at the movement destination when the edge part has moved, and the position of the edge part and the position of the edge part at the movement destination are associated with the time information and are stored as "work blade movement information" in the "work blade movement information storage part 212" in FIG. 4.

Next, the operation example proceeds to ST23. In ST23, the "movement information acquisition period management part (program) 205" of the tablet 200 operates to refer to the current time of the "timing device 204" and the "movement information acquisition period storage part 206 (e.g., 9:00 to 17:00)", determine whether or not the current time is in the acquisition period of the movement information of the bulldozer 400, and instruct the surveying instrument 2 to stop the acquisition of the position information (coordinate information) of the edge part when the current time is not in the acquisition period.

Next, the operation example proceeds to ST24 in FIG. 8. In ST24, a "work blade operation determination part (program) 213" in FIG. 4 operates to refer to the "work blade movement information storage part 212".

Subsequently, the work blade operation determination part 213 determines whether or not the change (movement) of the position information (coordinate information) of the edge part corresponds to "work movement information" based on the operation of the work blade 330.

Subsequently, in ST25, in the case where the movement of the edge part corresponds to the "work movement information", the operation example proceeds to ST26, and the coordinate information of the edge side is stored in a "work movement information storage part 214" in FIG. 4 as the work movement information.

Thus, according to the present embodiment, by referring to the "work movement information storage part 214", it is possible to grasp whether or not the bulldozer 400 has actually operated the work blade 330 with high accuracy.

Subsequently, the "maximum horizontal angle information" in the above-described first embodiment is generated based on the work movement information, and the three-dimensional point cloud data is generated in the scanner unit 5 of the surveying instrument 2 based on the angle area (inclusion angle).

Thus, when the three-dimensional point cloud data of the construction site CS is generated in the scanner unit 5 of the surveying instrument 2, it is possible to scan locations in which the bulldozer 400 has actually performed work more accurately.

In the present embodiment described thus far, while the description has been made by using, as an example, the case where the present invention is implemented as a device, the present invention is not limited thereto, and the present invention may also be stored as a program capable of causing a computer to execute the program in a storage medium such as a magnetic disk (a floppy (registered trademark) disk or a hard disk), an optical disk (a CD-ROM or a DVD), a magneto-optical disk (an MO), or a semiconductor memory, and may be distributed.

In addition, a storage medium may be any storage medium which can store a program and can be read by a computer. The storage form of the storage medium is not particularly limited.

Further, an OS (operating system) which operates on a computer based on an instruction of a program installed in the computer from a storage medium, or MW (middleware) such as database management software or network software may execute part of each processing for implementing the present embodiment.

Furthermore, the storage medium in the present invention is not limited to a medium independent of a computer, and includes a storage medium in which a program transmitted by a LAN or the Internet is downloaded and stored or temporarily stored.

In addition, the computer in the present invention only needs to execute each processing in the present embodiment based on a program stored in a storage medium, and may be a device constituted by one personal computer (PC) or the like, or a system or the like to which a plurality of devices are connected via a network.

Further, the computer in the present invention is not limited to the personal computer, and includes an arithmetic processing unit or a microcomputer included in information processing equipment, and equipment and devices capable of implementing functions of the present invention by a program are collectively referred to as the computer.

The embodiments of the present invention have been described thus far. However, the present invention is not limited to the above embodiments, and various changes can be made without departing from the scope of claims.

## Claims

1. A work result information acquisition device comprising:
a tracking part which tracks a movable body;
a scanning part which acquires three-dimensional point cloud information on an object;
a movable body movement information acquisition part which acquires movable body movement information, which is movement information on the movable body, by tracking by the tracking part and stores the movable body movement information; and
a work area information generation part which generates work area information on the object, based on the movable body movement information, wherein
three-dimensional work result information of the work area information is generated by scanning by the scanning part, based on the work area information.

2. The work result information acquisition device according to claim 1 further comprising:
a horizontal angle information storage part which stores horizontal angle information related to the movable body acquired by the tracking part when the tracking part tracks the movable body; and
a maximum movement information generation part which generates maximum movement information on a maximum area of the movable body movement information based on the horizontal angle information, wherein
the scanning part generates the three-dimensional work result information, based on the maximum movement information.

3. The work result information acquisition device according to claim 2, wherein
the movable body movement information is associated with movement time information, which is time information at a time of movement, and the maximum movement information is determined based on the movable body movement information which is associated with the movement time information in a work period between predetermined start time information and predetermined end time information.

4. The work result information acquisition device according to any one of claims 1 to 3, wherein a target part to be tracked by the tracking part is provided in the movable body.

5. The work result information acquisition device according to any one of claims 1 to 4, wherein
the movable body is a construction machine, the construction machine has a work end part for work, and
the target part is a work end part target part which is disposed in the work end part.

6. A work result information acquisition system comprising:
a work result information acquisition device including a tracking part which tracks a movable body and a scanning part which acquires three-dimensional point cloud information on an object; and
a terminal device capable of communicating with the work result information acquisition device, wherein
the terminal device includes:
a movable body movement information acquisition part which acquires movable body movement information, which is movement information on the movable body, by tracking by the tracking part and stores the movable body movement information; and
a work area information generation part which generates work area information on the object, based on the movable body movement information, and
three-dimensional work result information of the work area information is generated by scanning by the scanning part, based on the work area information.

7. A control method of a work result information acquisition device including a tracking part which tracks a movable body and a scanning part which acquires three-dimensional point cloud information on an object, the control method comprising:
acquiring movable body movement information, which is movement information of the movable body, by tracking by the tracking part;
causing a work area information generation part to generate work area information on the object, based on the movable body movement information; and
generating three-dimensional work result information of the work area information by scanning by the scanning part, based on the work area information.

8. A non-transitory computer-readable medium storing computer program instructions for a work result information acquisition device which causes the work result information acquisition device including a tracking part which tracks a movable body and a scanning part which acquires three-dimensional point cloud information on an object to implement:
a function of acquiring movable body movement information, which is movement information on the movable body, by tracking by the tracking part;
a function of causing a work area information generation part to generate work area information on the object, based on the movable body movement information; and
a function of generating three-dimensional work result information of the work area information by scanning by the scanning part, based on the work area information.
